# Europäisches Patentamt
# European Patent Office
# Office européen des brevets

(19)

(11) Publication number: **0 014 585**
**B1**

(12)

# EUROPEAN PATENT SPECIFICATION

(45) Date of publication of patent specification: **03.11.82**

(51) Int. Cl.³: **G 03 B 27/74**

(21) Application number: **80300335.9**

(22) Date of filing: **04.02.80**

(54) A photographic printer and a strip handling mechanism therefor.

(30) Priority: **02.02.79 US 8662**

(43) Date of publication of application:
**20.08.80 Bulletin 80/17**

(45) Publication of the grant of the patent:
**03.11.82 Bulletin 82/44**

(84) Designated Contracting States:
**CH DE GB**

(56) References cited:
**DE - A - 2 816 074**
**GB - A - 1 366 920**
**US - A - 3 556 517**
**US - A - 3 706 490**
**US - A - 3 836 248**
**US - A - 3 946 922**
**US - A - 4 147 080**

(73) Proprietor: **EASTMAN KODAK COMPANY**
**343 State Street**
**Rochester, New York 14650 (US)**

(72) Inventor: **Farrell, Robert J.**
**901 Elmgrove Road**
**Rochester, New York (US)**

(74) Representative: **Pepper, John Herbert et al,**
**KODAK LIMITED Patent Department P.O. Box 114**
**190 High Holborn**
**London WC1V 7EA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A photographic printer and a strip handling mechanism therefor

The present invention relates to photographic printers and, more specifically, to strip handling mechanisms for photographic printers.

One type of photographic printer in use includes a scanning gate and a printing gate in relatively close proximity. A long strip of film made up of several short strips of film spliced together is fed from a supply spool through the two gates to a take-up spool by a tendency drive between the printing gate and the take-up spool. Longitudinal alignment of the frames in the gates is accomplished by detecting a locator on the film for each frame, for example, a perforation in sizes 126 and 110 film and a notch in size 135 film. A detector, for example, a pawl or photoelectric sensor detects the locator and triggers stopping of the film at the appropriate position. Transverse movement of the film is prevented by a pair of pins at each gate between which the film moves.

Due to the splices, the long film strip is not longitudinally straight. Small misalignments at the splices cause the film to skew slightly between the two pairs of pins, which skewing is generally absorbed by transverse slippage at the tendency drive. Larger misalignments, not absorbed by the tendency drive, cause the film to curl or ride up over the pins, with the locators missing the detectors. Engagement at the tendency drive is made necessarily weak to allow such slippage and therefore requires additional drive motors on the supply and take-up rolls.

It is the object of the invention to provide apparatus of the type described in which the film drive does not need to absorb transverse film displacement and in which the tendency for locators to become misaligned with the detector is reduced.

In accomplishing this object, it was first recognized that modern computer controlled film scanning techniques permit some transverse misalignment at the scanning gate without adverse effects on exposure control.

According to the present invention, there is provided a film strip handling mechanism for a photographic printer having a printing gate and a scanning gate, said mechanism comprising means for restricting transverse displacement of a film strip at the printing gate, and a detector associated with the scanning gate for detecting locators on the film strip, characterized by a transversely displaceable support for the detector, which support includes guide means engageable by an edge of a received film strip to displace the support and the detector with and in response to transverse displacement of the film strip.

According to a preferred embodiment, the guide means comprises two pins fixed to the support and positioned to engage opposite edges of the film strip. The pins are received in apertures in a plate which apertures are configured to restrict longitudinal movement but permit transverse movement of the pins relative to a film strip received in the mechanism.

With this structure there is less likelihood of misalignment between the locators and the detector at the scanning gate.

Further, with transverse displacement of the film strip permitted at the scanning gate, the tendency drive need not permit slippage and can be replaced by a more efficient and less expensive, positive engagement drive.

According to the present invention there is also provided a photographic printer comprising a printing gate and a scanning gate characterized by a film strip handling mechanism as defined above.

The present invention will now be described by way of example with reference to the accompanying drawings in which:—

Fig. 1 is a perspective view of a portion of a long film strip that the apparatus of the present invention is particularly well suited to handle;

Fig. 2 is a perspective view of a portion of a photographic printer that incorporates the present invention;

Fig. 3 is a sectional view of the apparatus taken on the line 3—3 of Fig. 2; and

Fig. 4 is an exploded view of a portion of the apparatus shown in Fig. 2.

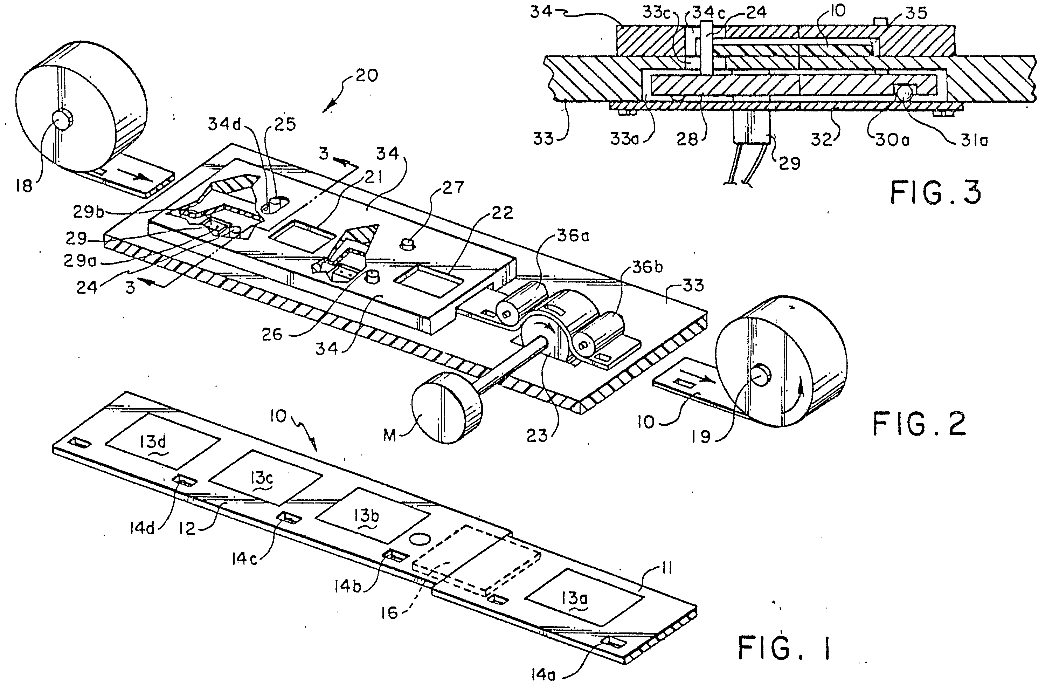

With reference now to Fig. 1, there is shown a portion of an elongated film strip 10 that is formed by splicing together many shorter film strips 11, 12. The formation of such an elongated film strip 10 is made by a photofinisher to facilitate advancement of the strips 11, 12 through a film processor and film printer. The film strips 11, 12 are butt spliced; i.e., joined together end-to-end by a suitable tape 16. As may be noted, the end of the film strip 11 is not precisely aligned with the end of film strip 12. Such a situation could be typical of several other splices in the long film strip 10. It will be noted that each negative frame 13a, 13b, 13c, 13d has associated therewith a perforation 14a, 14b, 14c, 14d respectively, each of which is located a precise fixed distance from a respective frame and thus may serve as a locator for that frame. As indicated previously, in lieu of perforations, notches may be provided along one edge of the strip 10 to identify each frame, as is the known practice for size 135 film strips.

With reference now to Fig. 2, an apparatus 20 is shown which comprises a portion of a photographic printer. The apparatus 20 includes a scanning gate 21, a printing gate 22 and a drive roller 23. The film strip 10 is unwound from a supply spool 18 and threaded through the apparatus 20 so that each frame is serially conveyed from the scanning gate 21 to the printing gate 22 and is then taken up by a tendency driven take-up spool 19. At the scanning gate 21 suitable known means may be provided for permitting the viewing of each frame seriatim to obtain exposure information about the frame. The viewing may be automatically accomplished, for example, by a scanning apparatus that takes a point by point scan of the frame and, with the use of a computer, converts the density and colour characteristics of each point into appropriate signals for controlling the printing of the frame. While one frame is being scanned or viewed by the scanning apparatus another frame may be printed at the printing gate 22 using exposure information derived when the latter frame was previously located in the scanning gate 21.

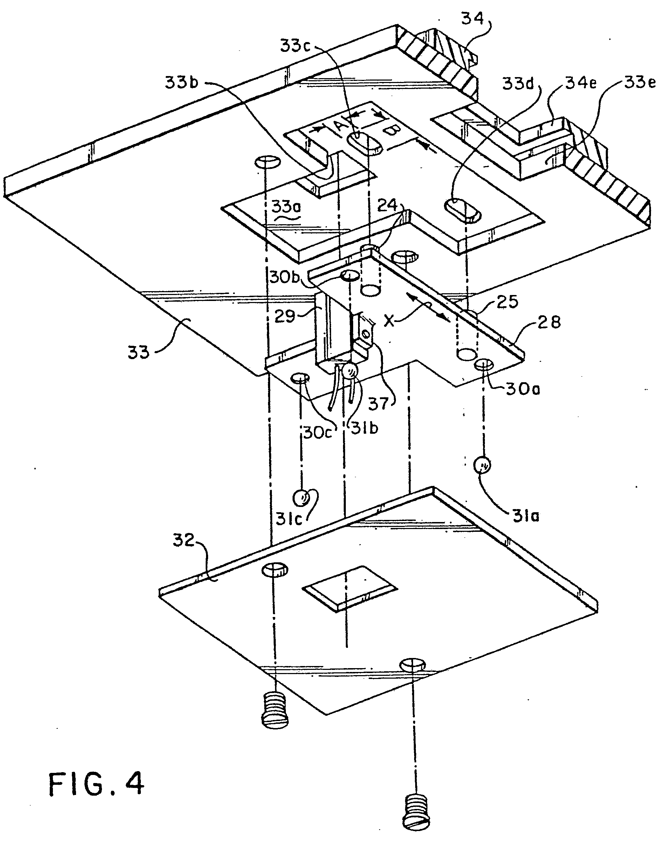

The apparatus 20 further includes guide means comprising guide pins 24, 25 at the scanning gate 21 and guide pins 26, 27 at the printing gate 22. Guide pins 24, 25 are spaced from each other a distance substantially equal to the nominal width of the film strip 10. As may be noted from Figs. 3 and 4, the pins 24, 25 are rigidly mounted on a transversely displaceable support formed by plate 28. Plate 28 also has rigidly mounted thereto a photoelectric detector 29 that includes a light source 29a and photoelectric cell 29b (Fig. 2). The photoelectric detector 29 is mounted to the plate 28 by a bracket 37 (Fig. 4) that extends from the plate 28. As the film strip 10 passes over the photoelectric detector 29, the photoelectric detector 29 will detect each perforation when light from the light source 29a fails to get reflected by the film to the photoelectric cell 29b but instead passes through the perforation. The photoelectric detector 29 thus must be located in a position such that each perforation will pass thereover. Plate 28 has 3 circular recesses 30a, 30b, 30c formed in the underside thereof which serve as seats for respective balls 31a, 31b, 31c that support plate 28 for transverse movement on a bottom plate 32. Plate 28 is located in a recess 33a formed in the underside of an intermediate plate 33. As may be noted in Fig. 4, plate 33 has three apertures 33b, 33c, 33d extending therethrough in the vicinity of the recess 33a. Aperture 33b is of a size suitable to receive the photoelectric detector 29. Apertures 33c, 33d are of identical size and respectively receive guide pins 24, 25 which extend through the apertures 33c, 33d. A narrow dimension "A" of each of the apertures 33c, 33d is slightly greater than the width of respective guide pins 24, 25 which extend therethrough to minimize movement of the guide pins 24, 25 in the direction of advancement of the film strip 10. A dimension "B" of each of the apertures 33c and 33d is long enough to permit movement of the guide pins 24, 25 in the directions of arrows "X" with and in response to transverse displacement of the film strip 10. As the photoelectric detector 29 also moves in the directions of arrows "X", the aperture 33b is suitably dimensioned to permit movement of the photoelectric detector 29 in these directions but as with apertures 33c, 33d permits substantially no longitudinal movement, i.e., movement in the direction of advancement of the film strip 10. A cover plate 34 is located above and rests upon intermediate plate 33. The cover plate includes on its under surface a recess 35 for cooperating with the top of the intermediate plate 33 to define a channel within which the film strip 10 may be conveyed. The cover plate 34 further includes apertures 34c (Fig. 3), 34d (Fig. 2) that are in line, respectively, with apertures 33c, 33d of the intermediate plate 33 to allow the guide pins 24, 25 to also extend through and move within the respective apertures 34c, 34d. The plates 33 and 34 additionally have apertures 33e, 34e (Fig. 4) respectively that are suitably aligned to provide the scanning gate 21.

Downstream of the scanning gate 21, suitable apertures may be formed in plates 33 and 34 for providing the printing gate 22. The printing gate 22 differs from the scanning gate 21 just described in that the guide pins 26, 27 may be fixed to intermediate plate 33 and need not move. Thus no movable plate or carriage need be provided at this gate.

It can be seen therefore that any transverse wavering movement in the film strip 10 against the guide pins 24, 25 will cause the entire plate 28 to be shifted with and in response to a movement of strip 10. As the photoelectric detector 29 is coupled to and supported for movement with the guide pins 24, 25 the photoelectric detector 29 will be a fixed distance from the appropriate edge of the film strip 10 and will therefore be in position to detect properly placed locators on the film strip 10 as the locators serially approach the photoelectric detector 29. Because the film strip 10 is allowed to waver in the scanning gate 21, it is not necessary to permit slipping movement of the film strip 10 upon drive roller 23. Thus derive roller 23, which is located downstream of the printing gate 22 may be a positive drive and incremented by a suitable stepping motor "M" that is operably coupled to the drive roller 23. Pressure rollers 36a, 36b may be provided adjacent drive roller 23 to ensure a proper "wrap" of the film strip 10 about the drive roller 23 for such positive drive.

Although the present invention has been described having a photoelectric detector, a mechanical detector such as a pawl could alternatively be used.

**Claims**

1. A film strip handling mechanism for a photographic printer having a printing gate and a scanning gate, said mechanism comprising

    means for restricting transverse displacement of a film strip at the printing gate, and a detector associated with the scanning gate for detecting locators on the film strip,

characterized by a transversely displaceable support (28) for the detector (29), which support (28) includes guide means (24, 25) engageable by an edge of a received film strip (10) to displace the support (28) and the detector (29) with and in response to transverse displacement of the film strip (10).

2. A film strip handling mechanism according to Claim 1 further characterized in that the guide means comprises two pins (24, 25) fixed to the support (28) and positioned to engage opposite edges of the film strip (10).

3. A film strip handling mechanism according to Claim 2 further characterized in that said pins (24, 25) are received in apertures (33c, 33d) in a plate (33) which apertures (33c, 33d) are configured to restrict longitudinal movement but permit transverse movement of the pins (24, 25) relative to a film strip (10) received in the mechanism.

4. A film strip handling mechanism according to Claim 1, 2 or 3 characterized by film strip drive means (23) positioned downstream of the printing gate (22), which drive means (23) is adapted to engage the film strip (10) in a manner restricting transverse movement of the film strip (10).

5. A film strip handling mechanism according to any one of the preceding claims characterized in that the means for restricting transverse displacement of a film strip (10) at the printing gate (22) comprises two fixedly mounted pins (26, 27) positioned to engage opposite edges of the film strip (10).

6. A film strip handling mechanism according to any one of the preceding claims characterized in that the detector (29) is photoelectric.

7. A photographic printer comprising a printing gate and a scanning gate characterized by a film strip handling mechanism according to any one of claims 1 to 6.

**Revendications**

1. Mécanisme de manipulation d'une bande de film pour une tireuse photographique ayant un couloir de tirage et un couloir d'analyse, ce mécanisme muni de moyens pour restreindre un déplacement transversal d'une bande de film au couloir de tirage et d'un détecteur associé au couloir d'analyse pour détecter des repères sur la bande de film étant caractérisé par un support (28) déplaçable transversalement pour le détecteur (29), ce support (28) comprenant des moyens de guidage (24, 25) que peut rencontrer un bord d'une bande de film (10) qui y est placée pour mouvoir le support (28) et le détecteur (29) avec et en réponse au déplacement transversal de la bande de film (10).

2. Mécanisme de manipulation d'une bande de film conforme à la revendication 1 caractérisé en outre en ce que les moyens de guidage comprennent deux chevilles (24, 25) fixées au support (28) et placées pour venir au contact de bords opposés de la bande de film (10).

3. Mécanisme de manipulation d'une bande de film conforme à la revendication 2 caractérisé en outre en ce que les dites chevilles (24, 25) sont reçues dans des ouvertures (33c, 33d) d'une plaque (33), les dites ouvertures (33c, 33d) étant configurées pour restreindre un déplacement longitudinal tout en autorisant un déplacement transversal des chevilles (24, 25) relativement à une bande de film (10) placée dans le mécanisme.

4. Mécanisme de manipulation d'une bande de film conforme aux revendications 1, 2 ou 3 caractérisé par un moyen d'entraînement de la bande de film (23) placé en aval du couloir de tirage (22), ce moyen d'entraînement (23) étant adapté pour venir au contact de la bande de film (10) d'une manière qui restreint un déplacement transversal de la bande de film (10).

5. Mécanisme de manipulation d'une bande de film conforme à l'une quelconque des revendications précédentes caractérisé en ce que les moyens pour restreindre un déplacement transversal d'une bande de film (10) au couloir de tirage (22) comprennent deux chevilles (26, 27) montées fixes placées pour venir au contact de bords opposés de la bande de film (10).

6. Mécanisme de manipulation d'une bande de film conforme à l'une quelconque des revendications précédentes caractérisé en ce que le détecteur (29) est photoélectrique.

7. Tireuse photographique équipée d'un couloir de tirage et d'un couloir d'analyse caractérisée par un mécanisme de manipulation d'une bande de film conforme à l'une quelconque des revendications 1 à 6.

**Patentansprüche**

1. Mechanismus zum Handhaben eines Filmstreifens in einem fotografischen Printer mit einem Kopierfenster und einem Abtastfenster, wobei der Mechanismus Mittel zum Begrenzen einer Querverschiebung eines Filmstreifens am Kopierfenster aufweist sowie einen dem Abtastfenster zugeordneten Detektor zum Ermitteln von Steuermarkierungen auf dem Filmstreifen, dadurch gekennzeichnet, daß für den Detektor (29) ein quer verschiebbarer Träger (28) vorgesehen ist, der Führungsmittel (24, 25) aufweist, die zum Verschieben des Trägers (28) und des Detektors (29) mit und entsprechend der Querverschiebung des Filmstreifens (10) mit einer Kante eines eingelegten Filmstreifens (10) in Eingriff bringbar sind.

2. Mechanismus zum Handhaben eines Filmstreifens nach Anspruch 1, dadurch gekennzeichnet, daß die Führungsmittel zwei Stifte (24, 25) aufweisen, die am Träger (28) befestigt und so angeordnet sind, daß sie in gegenüberliegende Kanten des Filmstreifens (10) eingreifen.

3. Mechanismus zum Handhaben eines Filmstreifens nach Anspruch 2, dadurch gekennzeichnet, daß die Stifte (24, 25) in Öffnungen (33c, 33d) einer Platte (33) eingreifen, wobei diese Öffnungen (33c, 33d) so ausgebildet sind, daß sie einer Längsbewegung der Stifte (24, 25) entgegenwirken, jedoch eine Bewegung der Stifte quer zu einem in den Mechanismus eingelegten Filmstreifen (10) ermöglichen.

4. Mechanismus zum Handhaben eines Filmstreifens nach den Ansprüchen 1, 2 oder 3, dadurch gekennzeichnet, daß Antriebsmittel (23) für den Filmstreifen hinter dem Kopierfenster (22) angeordnet sind und am Filmstreifen (10) so angreifen, daß einer Querverschiebung des Filmstreifens (10) entgegengewirkt wird.

5. Mechanismus zum Handhaben eines Filmstreifens nach einem der vorhergehenden Ansprüche, dadurch gekennzeichnet, daß die Mittel zum Begrenzen einer Querverschiebung eines Filmstreifens (10) am Kopierfenster (22) zwei fest gelagerte Stifte (26, 27) aufweisen, die an gegenüberliegenden Kanten des Filmstreifens (10) angreifen.

6. Mechanismus zum Handhaben eines Filmstreifens nach einem der vorhergehenden Ansprüche, dadurch gekennzeichnet, daß als Detektor (29) ein fotoelektrischer Detektor vorgesehen ist.

7. Fotografischer Printer mit einem Kopier- und einem Abtastfenster, gekennzeichnet durch einen Mechanismus zum Handhaben eines Filmstreifens nach einem der Ansprüche 1 bis 6.

FIG.3

34 — 33c 34c 24 10 35

33 33a 28 29 32 30a 31a

20

34d 25
29b
29
29a
24 3 3
26 34

21
27
22
36a
36b
33

M 23
10 19

FIG.2

10

13d
13c
14d 12
13b
14c
14b
13a
16 11
14a

FIG. 1

0014585

FIG.4